# EUROPEAN PATENT APPLICATION

(11) **EP 1 602 843 A2**
(43) Date of publication of application: **07.12.2005**
(21) Application number: 05253165.4
(22) Date of filing: 23.05.2005
(51) Int. Cl.: F16C 32/06

(54) **Brake of a member supported on a fluid bearing**

(30) Priority: 02.06.2004 JP 2004164247
(71) Applicant: FANUC LTD, Minamitsuru-gun, Yamanashi 401-0597 (JP)
(72) Inventor: Kawai, Tomohiko, Minamitsuru-gun Yamanashi 401-0304 (JP); Minami, Hiroshi Room 11-302, Minamitsuru-gun Yamanashi 401-0511 (JP)
(74) Representative: Billington, Lawrence Emlyn

(57) **Abstract**

Upper and lower thrust bearing faces and a peripheral radial bearing face are formed to surround peripheral and end portions of a disk provided to a rotating shaft supported by a fluid bearing. Pressurized fluid is supplied to the respective bearing faces from first to third fluid passages to thereby form fluid bearing faces. In order to rotate the rotating shaft, the pressurized fluid is supplied to all the passages to keep the rotating shaft and the disk from contact with a bearing member. In order to brake the rotating shaft, fluid supply to the second passage is interrupted. Thus, the rotating shaft is moved down by pressure on the bearing face on the first passage side and, as a result, the brake member comes in contact with the static portion to apply the brakes.

## Description

### BACKGROUND OF THE INVENTION

### 1. Field of the Invention

The present invention relates to a brake of a moving member supported on a fluid bearing.

### 2. Description of the Prior Art

In order to stop operation of a rotating body and a direct-acting body such as a rotating shaft, a rotating table, and a direct-acting slide, a brake is normally used. This brake stops moving operation of the rotating body or the direct-acting body by pressing a brake shoe, a brake band, or a brake pad against a member such as a brake drum and a brake disk rotating or moving together with the rotating body or the direct-acting body. In a case in which a fluid bearing for supporting a movable portion without contact by pressurized fluid is used as a bearing for the rotating body or the direct-acting body, the above-described brake is provided to brake the rotating body or the direct-acting body.

It is disadvantageous to provide the brake for the moving member such as the rotating shaft and the direct-acting slide in respects of cost and space efficiency.

### SUMMARY OF THE INVENTION

In a brake according to the present invention in a rotating shaft or a direct-acting slide supported by a fluid bearing, fluid supplied to one of opposed bearing faces of the fluid bearing is interrupted, the rotating shaft or the direct-acting slide is pressed against the bearing face where the fluid is interrupted by pressure of the fluid on the bearing face where the fluid is not interrupted, and a brake face provided to the rotating shaft or the direct-acting slide is brought into contact with a static portion to thereby brake the rotating shaft or the direct-acting slide.

With the brake of the invention, the rotating shaft or the direct-slide can be braked by only selectively interrupting any of the plurality of paths of the pressurized fluid toward the bearing faces of the fluidbearing. Therefore, it is possible to provide a low-cost brake with a simple structure.

### BRIEF DESCRIPTION OF THE DRAWINGS

The above and other objects and features of the present invention will become apparent fromdescriptions of the following embodiments by reference to the accompanying drawings, wherein:
FIGS. 1A and 1B are schematic diagrams of a first embodiment of a brake according to the present invention, in which the brake is applied to a rotating shaft supported on a fluid bearing;
FIGS. 2A and 2B are schematic diagrams of a second embodiment of the brake according to the invention, in which the brake is applied to a direct-acting slide mechanism supported on a fluid bearing;
FIGS. 3A and 3B are schematic diagrams of a third embodiment of the brake according to the invention, in which the brake is applied to a rotating shaft supported on a fluid bearing; and
FIGS. 4A and 4B are schematic diagrams of a fourth embodiment of the brake according to the invention, in which the brake is applied to a direct-acting slide mechanism supported on a fluid bearing.

### DETAILED DESCRIPTION OF THE PREFERRED EMBODIMENTS

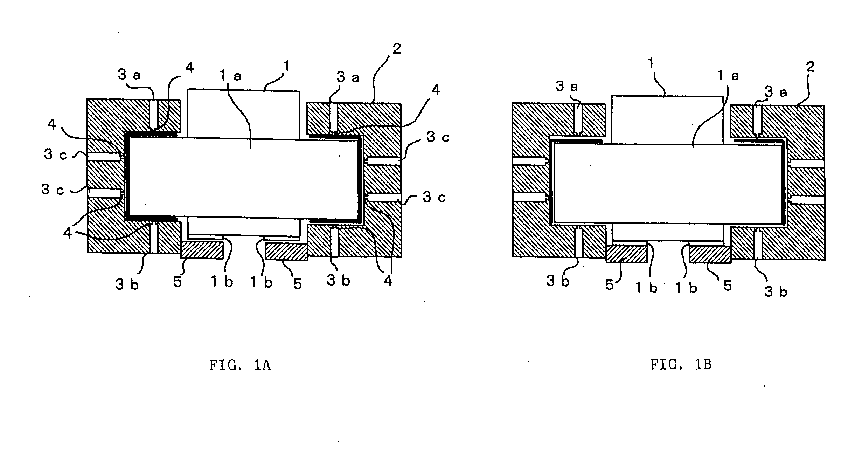

FIGS. 1A and 1B are schematic diagrams of the first embodiment of the brake according to the present invention. In this embodiment, the brake is applied to a rotating shaft supported on a fluid bearing and is different from a prior-art fluid bearing for a rotating shaft in that a static portion 5 and a brake member 1b forming the brake are provided at a lower portion of the fluid bearing. FIG. 1A shows a state in which a brake is not applied by the brake and FIG. 1B shows a state in which a brake is applied.

A flange-shaped disk 1a is integrally formed with a rotating shaft 1. A bearing member 2 is mounted in such a manner as to surround an outer peripheral face and upper and lower end faces of the disk 1a. In the bearing member 2, first to third passages 3a to 3c through which fluid such as pressurized air passes are formed.

From each the first passage 3a, the fluid is injected toward the upper end face of the disk 1a from a nozzle portion 4 formed at a tip end portion of the passage 3a. From each the second passage 3b, the fluid is injected toward the lower end face of the disk 1a from a nozzle portion 4 formed at a tip end portion of the passage 3b. In this way, thrust bearing portions are formed at the respective portions in the first and second passages 3a and 3b. In other words, faces of the bearing member 2 opposed to the upper and lower end faces of the disk 1a form thrust bearing faces.

Furthermore, the fluid is injected toward the peripheral face of the disk 1a from nozzle portions 4 formed at tip end portions of the third passages 3c. In this way, radial bearing portions are formed at respective portions in the third passages 3c. In other words, faces of the bearing member 2 opposed to the peripheral faces of the disk 1a form radial bearing faces of the fluid bearing.

Normally, the fluid such as pressurized air is supplied to the respective passages 3a to 3c, the fluid is injected from the nozzle portion 4 provided to the tip end of each of the passages 3a to 3c, a gap between the bearing member 2 and the disk 1a is filled with the pressurized fluid, and the rotating shaft 1, the disk 1a, and the bearing member 2 are kept from contact with each other to thereby form the fluid bearing.

On the other hand, in order to brake the rotating shaft 1 when it is rotating, fluid supply to the second passages 3b formed in the thrust bearing face on the lower face side of the disk 1a is interrupted. A state at this time is shown in FIG. 1B. By interruption of fluid supply toward the thrust bearing face on the lower face side of the disk 1a, the rotating shaft 1 and the disk 1a are pushed downward by the pressurized fluid supplied to the thrust bearing face on the upper face side of the disk 1a (and under their own weights) and a brake face provided to the rotating shaft 1 is brought into contact with the static portion 5 and braked.

As described above, in the first embodiment, the static portion 5 is disposed in such a position as to face the brake member 1b attached to the rotating shaft 1 and valves (not shown) for interrupting fluid supply to the second passages 3b are provided to thereby form the brake. As a result, the compact brake which does not especially require a space can be obtained easily at low cost.

In the above-described first embodiment, in order to brake rotation of the rotating shaft 1, the fluid supply from the second passages 3b is stopped to stop the fluid supply to the thrust bearing face on the lower face side of the disk 1a. In stead of that, fluid supply from the first passages 3amaybe interrupted to stop fluid supply toward the thrust bearing face on the upper face side of the disk 1a, the rotating shaft 1 and the disk 1a may be pushed and moved upward by pressure of the fluid supplied from the second passages 3b, and the static portion 5 provided above and the brake member 1b attached to the rotating shaft 1 may be brought into contact with each other to thereby apply the brakes.

Furthermore, because the rotating shaft 1 moves downward or upward as described above by interruption of fluid supply to the second passages 3b or interruption of fluid supply to the first passages 3a, the static portion 5 with which the rotating shaft 1 comes in contact when the shaft 1 moves upward and the static portion 5 with which the rotating shaft 1 comes in contact when the shaft 1 moves downward may be provided, the brake members 1b opposed to the respective static portions 5 may be attached to the rotating shaft 1, and fluid supply to the second passages 3b or the first passages 3a may be selectively interrupted as required to move the rotating shaft 1 downward or upward to thereby apply the brakes.

Although the rotating shaft 1 is in a vertical orientation in the case shown in FIGS. 1A and 1B, the rotating shaft 1 may be in horizontal or other orientations as long as fluid supply in one of the opposed thrust bearing faces formed on the disk 1a is interrupted and the rotating shaft 1 and the disk 1a are pushed and moved by pressure of fluid supplied to the other face to thereby bring the static portion 5 and the brake member 1b provided to the rotating shaft 1 into contact with each other to apply the brakes.

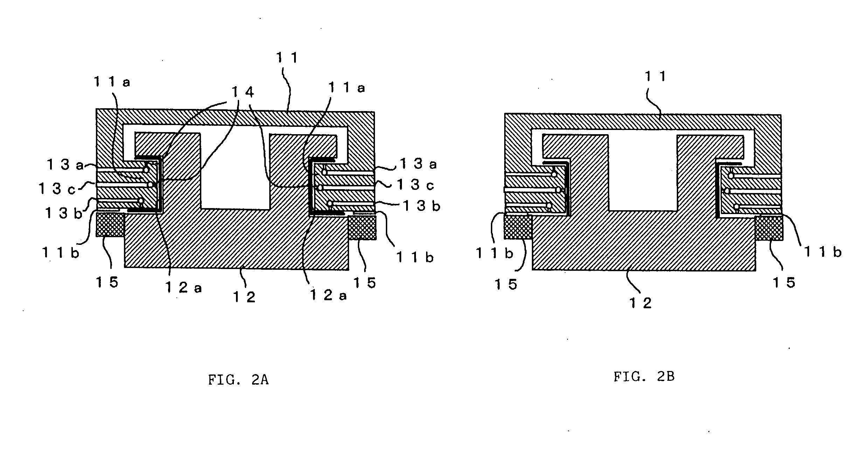

FIGS. 2A and 2B are schematic diagrams of the second embodiment of the brake according to the invention. In this embodiment, the brake is applied to a direct-acting slide mechanism supported on a fluid bearing. FIG. 2A shows a state in which a brake is not applied by the brake and FIG. 2B shows a state in which a brake is applied.

On opposite sides of a base 12 of the direct-acting slide mechanism, recessed portion grooves 12a extending in a direction of direct action of a direct-acting slide portion 11 (in a direction perpendicular to a paper face of FIG. 2) and having rectangular sectional shapes are provided. On the other hand, in the direct-acting slide portion 11, projecting portions 11a inserted into the respective recessed portion grooves 12a of the base 12 are provided. Upper and lower inner faces and vertical wall faces of the recessed portion grooves 12a of the base 12 respectively face upper and lower outer faces and tip end vertical faces of the projecting portions 11a of the direct-acting slide portion 11 to form bearing faces at respective portions.

Moreover, in the second embodiment, first to thirdpassages 13a to 13c to which pressurized fluid is supplied are formed in the upper and lower faces and the tip end vertical faces of the projecting portions 11a of the direct-acting slide portion 11. These passages 13a to 13c are formed with nozzle portions 14 for injecting fluid to the fluid bearing faces.

The fluid supplied to each the first passage 13a is injected toward the upper inner face of the recessed portion groove 12a of the base 12 through the nozzle portion 14. The fluid supplied to each the second passage 13b is injected toward the lower inner face of the recessed portion groove 12a through the nozzle portion 14. The fluid supplied to each the third passage 13c is injected toward the vertical face of the recessed portion groove 12a through the nozzle portion 14.

As a result, the pressurized fluid is supplied to the respective fluid passages 13a to 13c and injected from the respective nozzle portions 14 as shown in FIG. 2A. Thus, gaps between the recessed portion grooves 12a of the base 12 and the projecting portions 11a of the direct-acting slide portion 11 are filled with the pressurized fluid and the direct-acting slide portion 11 and the base 12 are kept from contact with each other to form the fluid bearing.

Brake members 11b are attached to a lower portion of the direct-acting slide portion 11 and static portions 15 are fixed to positions opposed to the brake members 11b of the base 12.

If the direct-acting slide portion 11 is driven while supplying the pressurized fluid to the respective fluid passages 13a to 13c to keep the direct-acting slide portion 11 from contact with the base 12 as shown in FIG. 2A, the direct-acting slide portion 11 moves linearly while being supported through the fluid by the recessed portion grooves 12a with the projecting portions 11a of the direct-acting slide portion 11 guided by the recessed portion grooves 12a of the base 12.

In order to apply the brakes to and stop the direct-acting slide portion 11 which is moving linearly, fluid supply to the second passages 13b is interrupted and fluid supply to at least the first passages 13a is continued. In other words, fluid supply toward the fluid bearing faces of the lower inner faces in the recessed portion grooves 12a of the base 12 is interrupted while fluid supply toward the upper fluid bearing faces of the recessed portion grooves 12a is continued. As a result, the direct-acting slide portion 11 is pushed downward by pressure fluid acting on the upper faces of the projecting portions 11a and moves down under its own weight and the brake members 11b attached to the lower face of the direct-acting slide portion 11 and the static portions 15 fixed to the base 12 come in contact with each other as shown in FIG. 2B. Thus, the direct-acting slide portion 11 is braked and movement of the portion 11 stops.

In this second embodiment, the brake members 11b may be provided to an upper face or the like of the direct-acting slide portion 11 and the static portions 15 may be disposed to face the brake members 11b to thereby apply the brakes. In other words, by interrupting fluid supply to the first passages 13a while continuing fluid supply to the second passages 13b, fluid supply to the fluid bearing faces of the upper inner faces of the recessed portion grooves 12a of the base 12 is interrupted. Then, the direct-acting slide portion 11 is pushed upward by the pressure fluid acting on the lower faces of the projecting portions 11a of the direct-acting slide portion 11 and the brake members 11b provided to the upper face or the like of the direct-acting slide portion 11 and the static portions 15 are brought into contact with each other to thereby apply the brakes to the direct-acting slide portion 11 to stop movement of the portion 11.

It is also possible to mount the brake members 11b to side portions of the direct-acting slide portion 11 with the static portions 15 disposed to face the brake members 11b. The fluid supply to either one of the left and right third passages 13c for supplying the fluid to the vertical face portions of the left and right recessed portion grooves 12a of the base 12 in FIG. 2 may be interrupted and the direct-acting slide portion 11 may be pushed by pressure of fluid on a side where the fluid is supplied to thereby press the brake members 11b against the static portions 15 to brake the movement of the direct-acting slide portion 11.

In the second embodiment, as described above, by selectively interrupting the first to third passages 13a to 13c for supplying fluid to the fluid bearing portions to move the direct-acting slide portion 11 upward, downward, leftward, or rightward, it is possible to apply the brakes to the direct-acting slide portion 11. Therefore, if the static portions 15 are provided above and below or on the left and right sides and the brake members 1b are provided to the direct-acting slide portion 11 while opposed to the static portions 15, the direct-acting slide portion 11 can be moved upward, downward, leftward, or rightward and the brake can be applied to the portion 11 by selectively interrupting any of the first to third passages 13a to 13c for supplying fluid to the bearing faces.

Although the passages 13a to 13c and the nozzle portions 4 for supplying the fluid for forming the fluid bearing toward the fluid bearing faces are provided to the direct-acting slide portion 11 in the above-described second embodiment, they may be provided to the base 12.

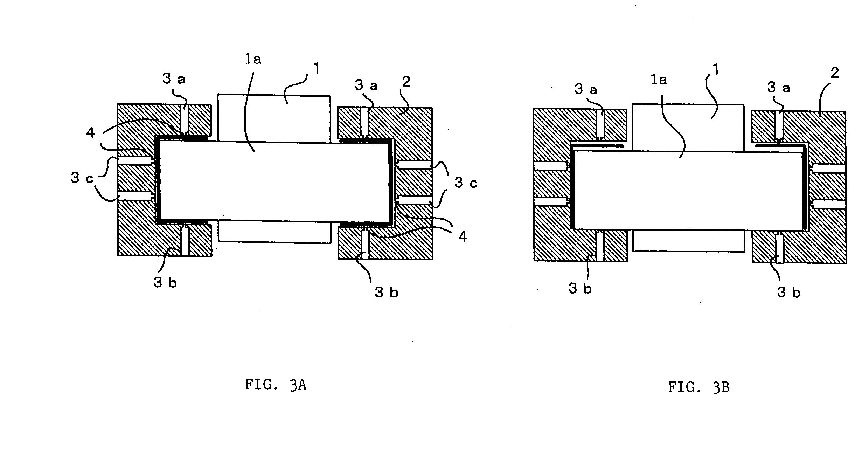

FIGS. 3A and 3B are schematic diagrams of a third embodiment of the brake according to the invention. In this embodiment, the brake is applied to a rotating shaft supported on a fluid bearing. The embodiment is different from the first embodiment in that the static portion 5 and the brake member 1b opposed to the static portion 5 are not especially provided and that a bearing face is used as a brake face. In other respects, the embodiment is similar to the first embodiment and components common to this embodiment and the first embodiment (FIGS. 1A and 1B) are provided with the same reference numerals. FIG. 3A shows a state in which a brake is not applied by the brake and FIG. 3B shows a state in which a brake is applied.

In the third embodiment, as shown in FIG. 3A, pressurized fluid is supplied to respective passages 3a to 3c and rotating shaft 1, a disk 1a, and a bearing member 2 are supported while kept from contact with each other to thereby form a fluid bearing. Fluid supply toward one end face side of the disk 1a is interrupted, the disk 1a and the rotating shaft 1 are pushed by pressure of fluid toward the other end face side as shown in FIG. 3B, and the end face of the disk 1a is pressed against a thrust bearing face to which the fluid is not supplied to thereby brake and stop the rotating shaft 1 which is rotating. In the case shown in FIG. 3, the fluid supplyto the secondpassages 3b is interrupted and the disk 1a is pressed downward by pressure of the fluid supplied from the first passages 3a to thereby press the lower face of the disk 1a against the thrust bearing face on a lower side of the recessed portion groove 12a of the bearing member 2 to brake the rotating shaft 1.

In the third embodiment, it is also possible to interrupt the fluid supply to the first passages 3a and to push the disk 1a and the rotating shaft 1 upward in FIG. 3 by pressure of the fluid supplied to the second passages 3b to thereby press the upper face of the disk 1a against the thrust bearing face on the upper side of the recessed portion of the bearing member 2 to brake the rotating shaft 1.

In the third embodiment, the two opposed thrust bearing faces can selectively be used as the brake face. For example, the two thrust bearing faces can alternately be used as the brake face.

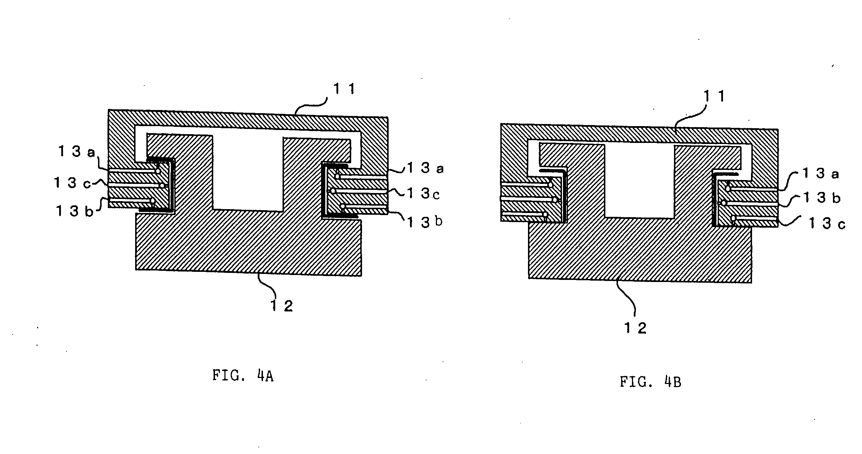

FIGS. 4A and 4B are schematic diagrams of the fourth embodiment of the brake according to the invention. In this embodiment, the brake is applied to a direct-acting slide mechanism supported on a fluid bearing. The embodiment is similar to the second embodiment except that the static portions 15 and the brake members 11b opposed to the static portions 15 are removed from the second embodiment (FIGS. 2A and 2B) and that the bearing faces are used as brake faces and components common to this embodiment and the second embodiment are provided with the same reference numerals. FIG. 4A shows a state in which a brake is not applied by the brake and FIG. 4B shows a state in which a brake is applied.

Like the second embodiment, if pressurized fluid is supplied to the first to thirdpassages 13a to 13c, a fluid bearing is formed and a direct-acting slide portion 11 is supported while kept from contact with a base 12 and able to slide as shown in FIG. 4A. When the direct-acting slide portion 11 is moving, if fluid supply to the second passages 13b is interrupted, the direct-acting slide portion 11 moves downward due to pressure of the fluid supplied from the first passages 13a and the direct-acting slide portion 11 comes in contact with the lower bearing faces formed in recessed portion grooves 12a of the base 12 to thereby apply the brakes to the movement of the direct-acting slide portion 11.

In the fourth embodiment, as described in the second embodiment, by interrupting fluid supply to the first passages 13a while continuing fluid supply to the second passages 13b, the direct-acting slide portion 11 is pushed upward and an upper face of projecting portions 11a of the direct-acting slide portion 11 are brought into contact with the upper bearing faces in the recessed portion grooves 12a of the base 12 to thereby apply the brakes. It is also possible that the fluid supply to either one of the left and right passages 13c for supplying the fluid to vertical face portions of the left and right recessed portion grooves 12a in FIG. 4 is interrupted. The direct-acting slide portion 11 is pushed and moved leftward or rightward by pressure of fluid on a side where the fluid is supplied to thereby bring the vertical face of the recessed portion groove 12a and a vertical face of the projecting portions 11a into contact with each other to brake the movement of the direct-acting slide portion 11.

In the fourth embodiment, like the second embodiment, it is possible to apply the brakes by moving the direct-acting slide portion 11 upward, downward, leftward, or rightward and the brake face can be selected.

## Claims

1. A brake in a rotating shaft supported by a fluid bearing, wherein fluid supplied to one of opposed thrust bearing faces of the fluid bearing is interrupted, the rotating shaft is pressed against the thrust bearing face where the fluid is interrupted by pressure of the fluid on the thrust bearing face where the fluid is not interrupted, and a brake face provided to the rotating shaft is brought into contact with a static portion to thereby brake the rotating shaft.

2. A brake in a direct-acting slide supported by a fluid bearing, wherein fluid supplied to one of opposed thrust bearing faces of the fluid bearing is interrupted, the direct-acting slide is pressed against the thrust bearing face where the fluid is interrupted by pressure of the fluid on the thrust bearing face where the fluid is not interrupted, and a brake face provided to a direct-acting slide portion is brought into contact with a static portion to thereby brake the direct-acting slide.

3. The brake according to claim 1 or 2, wherein the static portion is the bearing face where the fluid is interrupted.

4. A brake comprising:
a rotating shaft integrally formed with a flange-shaped disk:
a bearing member disposed to surround an outer peripheral face and upper and lower end faces of the disk;
first and second fluid passages formed in the bearing member so as to respectively supply fluid to gaps between the upper end face and the lower end face of the disk and the bearing member; and
a valve for interrupting fluid supply to one of the first and second fluid passages,
wherein the fluid is supplied between the disk and the bearing member through the first and second fluid passages when the valve is open, and
the rotating shaft is moved down or up and brought into contact with the bearing member by pressure of the fluid supplied through the second or first fluid passage to thereby be braked when the valve is closed.

5. A brake comprising:
a direct-acting slide portion having projecting portions or groove portions on its left and right sides,
a base having groove portions or projecting portions on its left and right sides to be engaged with the projecting portions or the groove portions of the direct-acting slide portion;
first and second fluid passages formed in the left and right projecting portions or groove portions of the direct-act ing slide portion; and
a valve for interrupting fluid supply to one of the first and second fluid passages,
wherein the fluid is supplied between the projections or grooves of the direct-acting slide portion and the groove portions or projecting portions of the base through the first and second fluid passages to form a fluid bearing when the valve is open, and
the direct-acting slide portion is pressed leftward or rightward and brought into contact with the base by pressure of the fluid supplied through the second or first fluid passage to thereby be braked when the valve is closed to interrupt fluid supply to the first or second fluid passage.
